# EUROPEAN PATENT SPECIFICATION

(11) **EP 1 410 536 B1**
(45) Date of publication and mention of the grant of the patent: **09.03.2005**
(21) Application number: 01274382.9
(22) Date of filing: 16.11.2001
(51) Int. Cl.: H04B 10/17, H04B 10/18, H01S 3/30

(54) **RAMAN ASSISTED EDFA SYSTEM AND METHOD**
VORRICHTUNG UND VERFAHREN ZUR EDFA-VERSTÄRKUNG MIT RAMANUNTERSTÜTZUNG
SYSTEME ET PROCEDE EDFA A ASSISTANCE RAMAN

(30) Priority: 16.11.2000 US 249346 P
(43) Date of publication of application: 21.04.2004
(73) Proprietor: Tyco Telecommunications (US) Inc., Morristown, NJ 07960 (US)
(72) Inventor: NISSOV, Morten, Ocean NJ 07722 (US); PILIPETSKII, Alexei, A., Colts Neck, NJ 07722 (US); GOLOVCHENKO, Ekaterina, Colts Neck, NJ 07722 (US); NAGEL, Jonathan, Brooklyn, NY 11231 (US); SERGEY, Ten, Horsehead NY 14845 (US)
(74) Representative: Brookes Batchellor LLP
(86) International application number: PCT/US2001/043519
(87) International publication number: WO 2003/009498

(56) References cited:
- EP-A- 0 903 877
- WO-A-99/43107
- MASUDA H ET AL: "WIDE-BAND AND GAIN-FLATTENED HYBRID FIBER AMPLIFIER CONSISTING OF AN EDFA AND A MULTIWAVELENGTH PUMPED RAMAN AMPLIFIER" IEEE PHOTONICS TECHNOLOGY LETTERS, IEEE INC. NEW YORK, US, vol. 11, no. 6, June 1999 (1999-06), pages 647-649, XP000835425 ISSN: 1041-1135

## Description

### FIELD OF THE INVENTION

The present invention relates to optical telecommunications systems. More particularly, the present invention relates to Raman assisted EDFA amplification in long haul and ultra-long haul optical telecommunications systems.

### BACKGROUND OF THE INVENTION

The maximum distances optical signals can travel through optical fiber before degrading to the point of being undetectable by a receiver is limited by, among other things, power loss or attenuation caused by dispersion, scattering, absorption and bending. Optical amplifiers are employed to reduce or minimize power loss, especially in long haul systems, i.e., about 200 to 600 km, and ultra-long haul (ULH) systems, i.e., greater than about 2,000 km.

Transmission systems may include a series of optical amplifiers periodically spaced along the fiber route between the transmitter and the receiver. These amplifiers provide the necessary optical signal power.

At relatively high optical signal power, optical fiber exhibits nonlinearities such as phase shifts of the optical signal. Specifically, because modulated optical signals include different wavelengths, these different portions propagate along the transmission fiber at different velocities due to dispersion properties inherent in the fiber media. After propagation over a given distance, shorter wavelengths may overtake and become superimposed on longer wavelengths causing amplitude distortion. This is known as.chromatic dispersion.

These and other factors are of particular interest in ULH telecommunication systems where, given the relatively long distances, the systems are susceptible to noise and pulse distortion. Therefore, the optical amplifiers must amplify sufficiently to raise the SNR to a level where a receiver can detect an optical signal but not be so high powered as to create intolerable nonlinearities.

Lumped rare earth doped fiber optic amplifiers such as erbium doped fiber amplifiers (EDFAs) are used in ULH optical fiber telecommunications systems. In custom systems, EDFA gains are matched to the fiber span losses to produce low noise amplified optical signals along the entire transmission path. In addition, the spans between amplifiers are preset at approximately the same lengths-- between about 40 to 50 km-- so that the loss per span is substantially consistent throughout the system.

Amplifying ULH terrestrial transmission systems and maintaining appropriate gain and low noise, by contrast, is somewhat more challenging. For example, ULH terrestrial systems are plagued with large span loss variations and daily and seasonal temperature fluctuations. Furthermore, unlike custom built submarine systems, terrestrial systems often have to be designed using existing fiber in the ground, unmatched and with unknown fiber characteristics. This embedded fiber base is typically non-zero dispersion shifted fiber (NZ-DSF) with a dispersion of about 2-4ps/nm/km. Significant dispersion, therefore, may accumulate over long transmission distances.

In addition, terrestrial systems are typically designed with wide varying amplifier spacings of about 30 to 110 km. The associated span loss is very high and inconsistent. In ULH systems, the longer spans generally cause increased noise accumulation. Similarly, the nonlinearities limit the amount of power that can be launched into the next NZ-DCF span. This complicates the EDFA design and may potentially degrade performance. That is, in an attempt to minimize costs, terrestrial systems typically attempt to use a single, generic EDFA design throughout the entire system, notwithstanding the loss and nonlinearity variations from one span to the next.

Therefore, there is a need for a system and method that account for these variations in the ULH terrestrial systems and provide for optimum launch power and noise performance. There is a further need for an terrestrial system that behaves like a custom built ULH submarine system, where, for example, the input power to each EDFA is consistent throughout the system regardless of the output from the previous EDFA stage and the type and length of each span.

A prior art system is known from "Wide-Band and Gain-Flattened Hybrid Fiber Amplifier Consisting of an EDFA and a Multiwavelenght Pumped Raman Amplifier Hirosi Masuda et al, IEEE Photonics Technology Letters, vol. 11 no. 6 June 1999.

### SUMMARY OF INVENTION

Accordingly, the present invention generally provides a system including distributed Raman assisted EDFA's to reduce the increased noise accumulation associated with long and inconsistent terrestrial spans but maintain the appropriate gain from each amplifier.

In accordance with one aspect, there is provided a Raman assisted EDFA hybrid amplifier. The amplifier includes a Raman amplifier variable gain portion, an EDFA gain portion; and an optical attenuator coupled to an output of the EDFA gain portion.

In a preferred embodiment, the amplifier includes at least one dispersion-compensating fiber disposed between the Raman amplifier variable gain portion and the EDFA gain portion. Alternatively, the dispersion-compensating fiber may be disposed within the Raman amplifier variable gain portion itself. If the EDFA gain portion is a multi-stage EDFA, the dispersion-compensating fiber may be disposed between stages of the multi-stage EDFA.

In another preferred embodiment, the Raman portion is configured to provide variable gain, such that the EDFA gain portion has a substantially constant input power. Preferably, the Raman amplifier variable gain ranges from about 1 to 16 dB. Most preferably the maximum Raman gain is about 14 dB. In yet another preferred embodiment, the optical attenuator reduces power from an output of the EDFA gain portion. Most preferably, the attenuator reduces power in 1 dB increments.

Thus, in accordance with this aspect of the present invention, a hybrid amplifier is provided that includes a variable Raman gain source for optimizing the amplifier so that the overall effect of noise accumulation and multi-path interference (caused by multiple Rayleigh scattering) is minimized.

In most preferred embodiments, lumped amplifiers, such as EDFAs, are used with varying span lengths, ranging, for example, from about 30 to about 110 km between amplifiers. In combination with these EDFAs, there is provided variable Raman gain amplifiers to provide optimum Raman gain depending upon the span in order to choose the maximum Raman gain and thus optimize noise performance and multi-path interference. In a sense the Raman amplifier is configured like a pre-amplifier for the EDFA gain portion.

In another aspect of the present invention, there is provided a method of amplifying an optical signal on an optical fiber communication link. One embodiment of this aspect includes providing a first Raman assisted EDFA hybrid amplifier having a Raman amplifier variable gain portion, an EDFA gain portion, and an optical attenuator coupled to an output of the EDFA gain portion; transmitting the optical signal on the optical fiber communication link through the Raman assisted EDFA hybrid amplifier; amplifying the optical signal through the Raman amplifier variable gain portion; amplifying the optical signal through the EDFA gain portion; and attenuating the output power of the EDFA gain portion.

Several important advantages will be appreciated from the foregoing summary. For example, the EDFA benefits from forward pumping and is capable of taking full advantage of the Raman assist. That is, in combination with variable Raman gain, all the spans are operated with optimum launch powers into longer lossier spans, with an improvement in noise performance and minimal nonlinear effects.

As another advantage, the present invention allows for a single EDFA design to be used, in combination with Raman variable gain, in a system having spans ranging from 30km to 110km. This allows for the use of one type of amplifier as a generic building block for terrestrial ULH systems having varying spans.

Additional features and advantages of the invention will be set forth in the description that follows. It is to be understood that both the foregoing general description and the following detailed description are exemplary and are intended to provide further explanation of the invention as claimed.

In the drawings, like reference characters denote similar elements throughout the figures. It is to be understood that various elements of the drawings may not be drawn to scale and may sometimes be purposely distorted for the purposes of illustrating the invention.

### BRIEF DESCRIPTION OF THE DRAWINGS

FIG. 1A is a block diagram of an exemplary optical communications system in accordance with one embodiment of the present invention;

FIG. 1B is a block diagram of a multi-stage EDFA in accordance with an embodiment of the present invention;

FIG. 2 is a graph showing the equivalent noise figure verses internal Raman gain for a particular 100km span;

FIG. 3 illustrates an exemplary method of choosing the launch power, EDFA output loss and Raman gain; and

FIG. 4 is a graph showing system a noise figure for a 7500 km system as a function of span length.

### DETAILED DESCRIPTION OF THE PREFERRED EMBODIMENTS

Reference will now be made in detail to the present preferred embodiments of the invention, an example of which is illustrated in the accompanying drawings.

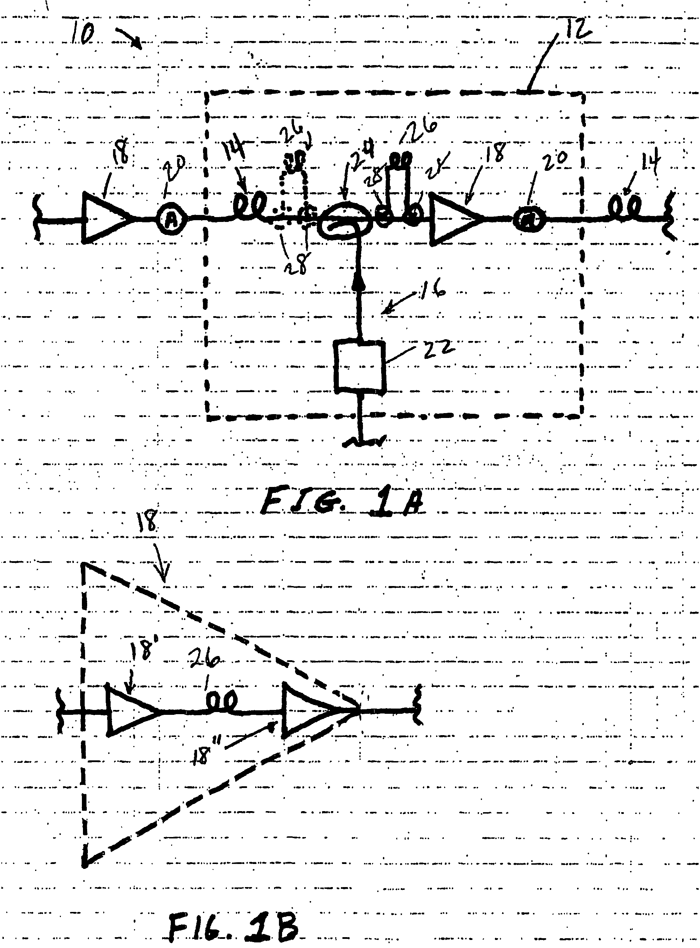

An exemplary embodiment of the present invention is shown in Fig. 1A and is designated generally by reference numeral 10. As embodied herein and referring to Fig. 1, a portion of an optical communication system 10, including at least one Raman assisted EDFA hybrid amplifier 12. The hybrid amplifier includes transmission fiber 14, a Raman gain source 16, an EDFA gain source 18, and an optical attenuator 20. The Raman gain source 16 includes a Raman pump module 22, having one or more Raman wavelengths. Each can be independently adjustable through separate attenuators or through bias adjustments. In this preferred embodiment, the Raman gain source 16 is coupled to the transmission fiber 14 by way of coupler 24. The coupler may be any known type such as a WDM module or a 3dB device. The Raman gain is introduced into the transmission fiber 14 in a counterpropagating direction.

The EDFA gain source 18 is provided by any known EDFA module such as a 980nm pumped EDFA or a 1480nm pumped EDFA. The EDFA gain source 18 may also consist of a dual stage EDFA or multi-stage EDFA as shown in FIG. 1B. The first EDFA 18' is coupled to the second EDFA 18". Disposed between the EDFAs in the multi-stage EDFA module 18 of FIG. 1B is dispersion-compensation fiber (DCF).
Disposed between the Raman gain source 16 and the EDFA gain source 18 in FIG. 1A is DCF 26. This DCF 26 may alternatively be part of the Raman gain path as designated by the dashed lines and shown disposed coupled to the transmission fiber 14 before coupler 24. The DCF 26 is coupled into the transmission fiber 14 in this particular embodiment because this configuration assumes that the transmission fiber 14 is part of a terrestrial system that is already in the ground and would need to have the DCF coupled in. The DCF is of the conventional sort as well.
Those skilled in the art will recognize that the system segment 10 has been depicted as highly simplified for ease of explanation. It is to be understood that the present invention may be incorporated into a wide variety of optical networks, systems and optical amplifiers without departing from the scope of the invention defined by the appended claims.
Distributed Raman gain is an important factor in achieving long haul or ULH in a terrestrial system with span lengths extending up to 110 km. The variable Raman gain source 16 acts as a pre-amplifier for the EDFA. System signal-to-noise ratio (SNR) is improved with increasing Raman gain. Unfortunately, interference noise (caused by multiple Rayleigh scattering) is also increased with increasing Raman gain. Raman gain can therefore only be increased until the point where the improvement in SNR is removed by the increase in interference noise. This optimum Raman gain depends on the span length and also might depend on the specific fiber type.

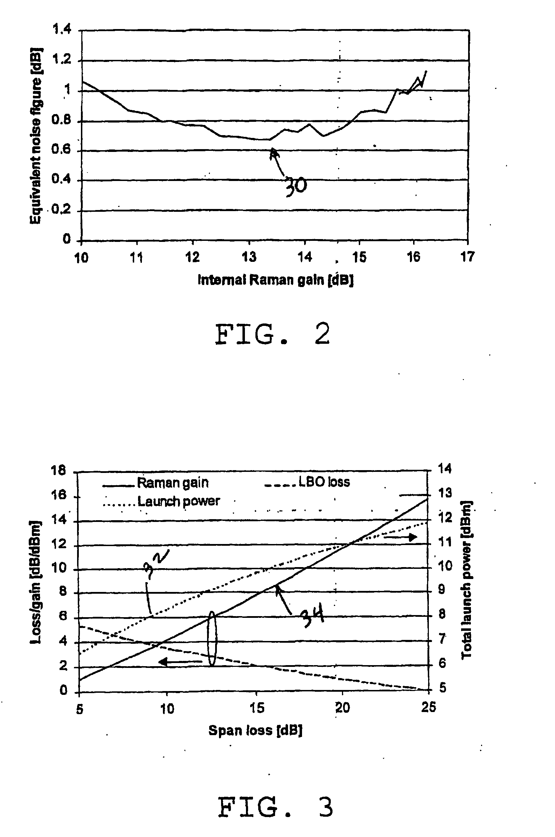

In this regard, FIG. 2 illustrates the equivalent noise figure (dB) versus internal Raman gain (dB) for an exemplary 100 km span. In this example, the equivalent (lumped) single amplifier noise figure is calculated so that an equivalent chain of optical amplifiers with the same span loss, the same equivalent noise figure, and the same path average intensity have the same output SNR as the hybrid (distributed Raman, EDFA) chain. Equivalent noise figures of 3-4 dB means that the hybrid chain is performing as well as a conventional EDFA chain (i.e., no net improvement). The minimum equivalent noise figure 30 in Figure 2 is approximately 0.7 dB which is achieved for a Raman gain of about 14 dB. Therefore, a maximum Raman gain of about 14 dB in every span significantly improves the noise performance by about 3.4 dB compared to no Raman gain at all (for 100 km spans). The performance improvement of Raman gain reduces for shorter spans. The largest improvement is achieved for the very long spans.

As mentioned, all long-haul systems, not just ULH systems, are non-linearity limited. The channel launch power is basically chosen as a trade-off between noise accumulation (received SNR) and pulse distortions due to fiber non-linearities. With the same amount of end-to-end non-linear impairment, more power can be launched into a long span than into a short span. The launch power that optimizes (trades-off non-linearities and noise accumulation) system performance is a function of span length, but the optimum path average intensity is usually the same regardless of the span length.

In operation, a ULH system design in accordance with the present invention chooses launch power based on the following span so that optimum power is launched into it. The adjustment is performed by adding loss to the output of the previous EDFA of the Raman assisted EDFA hybrid amplifier, for example, in 1 dB increments. The Raman gain is adjusted either manually or via feedback so that all EDFAs have the same input power.

With the same input and output power for all EDFAs, a major advantage over the known art is realized in that a single code of preferably single-stage medium gain EDFAs can be used with terrestrial systems regardless of the span loss distribution (within practical limits: e.g., 30-110 km). The EDFA gain and output power, the Raman gain upper and lower limits, and upper and lower loss limits can be chosen for a generation or class of systems without custom design for each amplifier in the transmission path. Another advantage of this design is that it significantly simplifies the gain equalization plan.

Turning now to FIG. 3, which illustrates an exemplary method for choosing the launch power (for equal path average intensity), EDFA output loss, and Raman gain (for constant input power), this Figure shows that span losses from 5-25 dB can be handled by varying launch power 32 from 6.5-12 dBm (using 0-5.5 dB loss) and varying Raman gain 34 from 1-16 dB. All of this can be achieved in a practical system with available components.

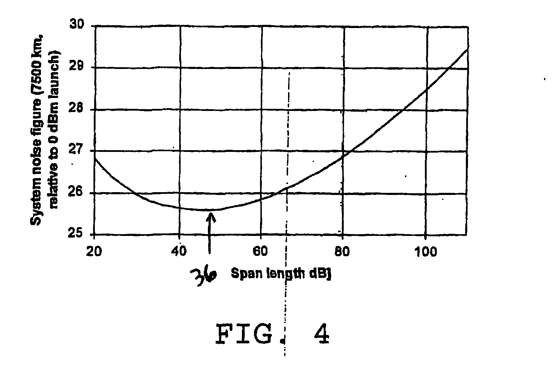

Turning now to FIG. 4, which illustrates the system noise figure versus span length (dB), this Figure shows the received SNR scales directly with the system noise figure. As shown at data point 36, 45 km spans give the best performance using this design. The difference between effective noise figures of 45 km spans and 110 km spans is less than 4 dB, and the difference between 45 km spans and 85 km spans (typical average span length for terrestrial routes) is less than 2 dB. Therefore, it has been discovered that this design enables transmission over ULH terrestrial systems with widely distributed span lengths (averaging 85 km) with an SNR impairment of less than 2 dB compared to a system consisting of 45 km spans (similar to a submarine system).

Thus, one advantage of the present invention is that the preferred system design makes a terrestrial link look and behave like a traditional long-haul or ULH undersea link. One code of (single stage) EDFAs is used with varying output loss to launch the optimum power into each span regardless of length. The Raman gain is adjusted so that each EDFA has substantially the same input power. This concept minimizes system degradation from wide span loss distributions and allows generic repeaters to be manufactured and used in all systems of the same generation (capacity).

It will be apparent to those skilled in the art that various modifications and variations can be made in the Raman assisted EDFA module of the present invention without departing from the scope of the invention. Thus, it is intended that the present invention cover the modifications and variations of this invention provided they come within the scope of the appended claims and their equivalents.

## Claims

1. An optical communications system (10) comprising:
a transmitter for transmitting an optical signal;
a receiver for detecting said optical signal; and
an optical fiber communications link interposed between said transmitter and said receiver, said optical fiber communications link comprising:
at least one Raman assisted EDFA hybrid amplifier (12) having a Raman amplifier variable gain portion (14) and an EDFA gain portion (18); and **characterized by** an optical attenuator (20) coupled to the output of said EDFA gain portion.

2. The system of claim 1 further comprising at least one dispersion-compensation fiber (26) disposed between said Raman amplifier variable gain portion and said EDFA gain portion.

3. The system of claim 1 further comprising at least one dispersion-compensation fiber disposed within said Raman amplifier variable gain portion.

4. The system of claim 1. wherein said EDFA gain portion comprises a multi-stage EDFA.

5. The system of claim 4 further comprising a least one dispersion-compensation fiber disposed between stages of said multi-stage EDFA.

6. The system of claim 1 wherein said optical fiber communication link comprises a plurality of optical fiber spans of varying lengths connected and arranged between said transmitter and said receiver.

7. The system of claim 1 further comprising a second Raman assisted EDFA hybrid amplifier, wherein said at least one Raman assisted EDFA hybrid amplifier is configured to achieve an optimum launch power for said second Raman assisted EDFA hybrid amplifier.

8. The system of claim 1 wherein said optical fiber communication link comprises a plurality of said Raman assisted EDFA hybrid amplifier.

9. The system of claim 8 wherein said optical attenuator of each said plurality of Raman assisted EDFA hybrid amplifiers is adjusted to reduce the output power of said EDFA gain portion.

10. The system of claim 9 wherein said output power is adjusted in 1 dB increments until optimum power is reached to be launched into the next adjacent Raman assisted EDFA hybrid amplifier.

11. The system of claim 8 wherein said Raman amplifier variable gain portions are manually adjusted until said EDFA gain portions have substantially the same input power throughout said optical fiber communications link.

12. The system of claim 8 wherein said optical attenuator of each said plurality of Raman assisted EDFA hybrid amplifiers is adjusted to reduce the output power of said EDFA gain portion, and wherein said Raman amplifier variable gain portions are manually adjusted until said EDFA gain portions have substantially the same input power throughout said optical fiber communications link.

13. The system of claim 8 wherein said Raman amplifier variable gain portions are adjusted by way of a feedback loop until said EDFA gain portions have substantially the same input power throughout said optical fiber communications link.

14. The system of claim 8 wherein said optical attenuator of each said plurality of Raman assisted EDFA hybrid amplifiers is adjusted to reduce the output power of said EDFA gain portion, and wherein said Raman amplifier variable gain portions are adjusted by way of a feedback loop until said EDFA gain portions have substantially the same input power throughout said optical fiber communications link.

15. The system of claim 6 wherein said optical fiber span lengths range from about 30 to about 110 km.

16. A Raman assisted EDFA hybrid amplifier (12) comprising:
a Raman amplifier variable gain portion (14),
an EDFA gain portion (18); and **characterized by**
an optical attenuator (20) coupled to an output of said EDFA gain portion.

17. The amplifier of claim 16 further comprising at least one dispersion-compensation fiber (26) disposed between said Raman amplifier variable gain portion and said EDFA gain portion.

18. The amplifier of claim 16 further comprising at least one dispersion-compensation fiber disposed within said Raman amplifier variable gain portion.

19. The amplifier of claim 16 wherein said EDFA gain portion comprises a multi-stage EDFA.

20. The amplifier of claim 19 further comprising a least one dispersion-compensation fiber disposed between stages of said multi-stage EDFA.

21. The amplifier of claim 16 wherein said EDFA portion is a single stage EDFA.

22. The amplifier of claim 16 wherein said Raman portion is configured to provide variable gain, whereby said EDFA portion has a substantially constant input power.

23. The amplifier of claim 16 wherein said variable gain ranges from about 1 to 16 dB.

24. The amplifier of claim 16 wherein said optical attenuator reduces output power of said EDFA gain portion.

25. The amplifier of claim 24 wherein said attenuator reduces output power in 1 dB increments.

26. A method of amplifying an optical signal on an optical fiber communication link comprising:
providing a first Raman assisted EDFA hybrid amplifier having a Raman amplifier variable gain portion, an EDFA gain portion, and an optical attenuator coupled to an output of said EDFA gain portion;
transmitting said optical signal on said optical fiber communication link through said Raman assisted EDFA hybrid amplifier;
amplifying said optical signal through said Raman amplifier variable gain portion;
amplifying said optical signal through said EDFA gain portion; and
attenuating the output power of said EDFA gain portion.

27. The method of claim 26 further comprising adjusting said optical attenuator to add a predetermined loss to the output of said EDFA gain portion, whereby the launch power is optimized.

28. The method of claim 26 further comprising:
providing a second Raman assisted EDFA hybrid amplifier having a Raman amplifier variable gain portion, an EDFA gain portion, and an optical attenuator coupled to an output of said EDFA gain portion; and
adjusting the Raman gain of said first Raman amplifier variable gain portion, whereby the input power of said second EDFA gain portion is substantially the same as the input power of said first EDFA gain portion.

29. A method of amplifying an optical signal on an optical fiber communication link comprising:
providing a plurality of Raman assisted EDFA hybrid amplifiers, each having a Raman amplifier variable gain portion, an EDFA gain portion, and
an optical attenuator coupled to an output of said EDFA gain portion;
transmitting said optical signal on said optical fiber communication link through said Raman assisted EDFA hybrid amplifiers;
amplifying said optical signal through said Raman amplifier variable gain portions;
amplifying said optical signal through said EDFA gain portions; and
attenuating the output power of said EDFA gain portions to add a predetermined loss to the output of each of said EDFA gain portions, whereby the launch power into the next Raman assisted EDFA hybrid amplifier is optimized and the input power into said EDFA gain portions are substantially the same throughout the system.

## Patentansprüche

1. Optisches Kommunikationssystem (10), umfassend:
einen Sender zum Senden eines optischen Signals;
einen Empfänger zum Detektieren des optischen Signals; und
eine zwischen dem Sender und Empfänger angeordnete Lichtwellenleiterkommunikationsverbindung, wobei die Lichtwellenleiterkommunikationsverbindung umfaßt:
wenigstens einen Raman-unterstützten EDFA-Hybrid-Verstärker (12) mit einem variablen Raman-Verstärkungsabschnitt (14) und einem EDFA-Verstärkungsabschnitt (18); und **gekennzeichnet durch** eine optische Dämpfungseinrichtung (20), die mit dem Ausgang des EDFA-Verstärkungsabschnittes gekoppelt ist.

2. System nach Anspruch 1, weiter umfassend wenigstens einen Dispersionskompensationslichtwellenleiter (26), der zwischen dem variablen Raman-Verstärkungsabschnitt und dem EDFA-Verstärkungsabschnitt angeordnet ist.

3. System nach Anspruch 1, weiter umfassend wenigstens einen Dispersionskompensationslichtwellenleiter, der in dem variablen Raman-Verstärkungsabschnitt angeordnet ist.

4. System nach Anspruch 1, wobei der EDFA-Verstärkungsabschnitt einen Mehrstufen-EDFA aufweist.

5. System nach Anspruch 4, weiter umfassend wenigstens einen Dispersionskompensationslichtwellenleiter, der zwischen Stufen des Mehrstufen-EDFA angeordnet ist.

6. System nach Anspruch 1, wobei die Lichtwellenleiterkommunikationsverbindung eine Vielzahl von Lichtwellenleiterabständen variabler Länge, die verbunden und angeordnet sind zwischen dem Sender und Empfänger.

7. System nach Anspruch 1, weiter umfassend einen zweiten Raman-unterstützten EDFA-Hybrid-Verstärker, wobei wenigstens ein Raman-unterstützter EDFA-Hybrid-Verstärker, der derart ausgebildet ist, um eine optimale Koppelleistung für den zweiten Raman-unterstützten EDFA-Hybrid-Verstärker zu gewährleisten.

8. System nach Anspruch 1, wobei die Lichtwellenleiterkommunikationsverbindung eine Vielzahl von Raman-unterstützten EDFA-Hybrid-Verstärkern umfaßt.

9. System nach Anspruch 8, wobei die optische Dämpfungseinrichtung von jeder der Vielzahl der Raman-unterstützten EDFA-Hybrid-Verstärker ausgebildet ist, um die Ausgangsleistung des EDFA-Verstärkungsabschnittes zu reduzieren.

10. System nach Anspruch 9, wobei die Ausgangsleistung in 1-dB-Schritten bis zum Erreichen der optimalen Leistung justiert wird, um sie in den nächsten benachbarten Raman-unterstützten EDFA-Hybrid-Vertärker zu koppeln.

11. System nach Anspruch 8, wobei die variablen Raman-Verstärkungsabschnitte manuell justiert werden, bis die EDFA-Verstärkungsabschnitte im wesentlichen die gleiche Eingangsleistung durch die Lichtwellenleiterkommunikationsverbindung aufweisen.

12. System nach Anspruch 8, wobei die optische Dämpfungseinrichtung von jeder der Vielzahl der Raman-unterstützten EDFA-Hybrid-Verstärker eingestellt sind, um die Ausgangsleistung der EDFA-Verstärkungsabschnitte zu reduzieren, und wobei die variablen Raman-Verstärkungsabschnitte manuell justiert werden, bis die EDFA-Verstärkungsabschnitte im wesentlichen die gleiche Eingangs-Leistung durch die Lichtwellenleiterkommunikationsverbindung aufweisen.

13. System nach Anspruch 8, wobei die variablen Raman-Verstärkungsabschnitte durch einen Regelkreis justiert werden, bis die EDFA-Verstärkungsabschnitte im wesentlichen die gleiche Eingangsleistung durch die Lichtwellenleiterkommunikationsverbindung aufweisen.

14. System nach Anspruch 8, wobei die optische Dämpfungseinrichtung von jeder der Vielzahl der Raman-unterstützten EDFA-Hybrid-Verstärker derart justiert sind, um die Ausgangsleistung der EDFA-Verstärkungsabschnitte zu reduzieren, und wobei die variablen Raman-Verstärkungsabschnitte durch einen Regelkreis justiert werden, bis die EDFA-Verstärkungsabschnitte im wesentlichen die gleiche Eingangsleistung durch die Lichtwellenleiterkommunikationsverbindung aufweisen.

15. System nach Anspruch 6, wobei die Lichtwellenleiterabstandslängen 30 bis 110 km betragen.

16. Raman-unterstützter EDFA-Hybrid-Verstärker (12), umfassend:
einen variablen Raman-Verstärkerabschnitt,
einen EDFA-Verstärkungsabschnitt (18); und
**dadurch gekennzeichnet, daß** eine optische Dämpfungseinrichtung (20) an den Ausgang des EDFA-Verstärkungsabschnittes gekoppelt ist.

17. Verstärker nach Anspruch 16, weiter umfassend wenigstens einen Dispersionskompensationslichtwellenleiter (26), der zwischen dem variablen Raman-Verstärkungsabschnitt und dem EDFA-Verstärkungsabschnitt angeordnet ist.

18. Verstärker nach Anspruch 16, weiter umfassend wenigstens einen Dispersionskompensationslichtwellenleiter, der in dem variablen Raman-Verstärkungsabschnitt angeordnet ist.

19. Verstärker nach Anspruch 16, wobei der EDFA-Verstärkungsabschnitt einen Mehrstufen-EDFA aufweist.

20. Verstärker nach Anspruch 19, weiter umfassend wenigstens einen Dispersionskompensationslichtwellenleiter, der zwischen Stufen des Mehrstufen-EDFA angeordnet ist.

21. Verstärker nach Anspruch 16, wobei der EDFA-Abschnitt ein Einstufen-EDFA ist.

22. Verstärker nach Anspruch 16, wobei der Raman-Abschnitt ausgebildet ist, um einen variablen Verstärkungsfaktor bereitzustellen, wobei der EDFA-Abschnitt eine im wesentlichen konstante Eingangsleistung aufweist.

23. Verstärker nach Anspruch 16, wobei der variable Verstärkungsfaktor zwischen 1 bis 16 dB variiert.

24. Verstärker nach Anspruch 16, wobei die optische Dämpfungseinrichtung die Ausgangsleistung des EDFA-Verstärkungsabschnittes reduziert.

25. Verstärker nach Anspruch 24, wobei die Dämpfungseinrichtung die Ausgangsleistung in 1-dB-Schritten reduziert.

26. Verfahren zur Verstärkung eines optischen Signals an einer Lichtwellenleiterkommunikationsverbindung, umfassend:
Bereitstellen eines ersten Raman-unterstützten EDFA-Verstärkers mit einem variablen Raman-Verstärkungsabschnitt, einem EDFA-Verstärkungsabschnitt und einer optischen Dämpfungseinrichtung, die an den Ausgang des EDFA-Verstärkungsabschnittes gekoppelt ist;
Senden eines optischen Signals zu der Lichtwellenleiterkommunikationsverbindung durch den Raman-unterstützten EDFA-Hybrid-Verstärker;
Verstärken des optischen Signals durch den variablen Raman-Verstärkungsabschnitt;
Verstärkung des optischen Signals durch den EDFA-Verstärkungsabschnitt; und
Dämpfen der Ausgangsleistung des EDFA-Verstärkungsabschnittes.

27. Verfahren nach Anspruch 26, weiter umfassend das Justieren der optischen Dämpfungseinrichtung, um einen vorbestimmten Verlust an dem Ausgang des EDFA-Verstärkungsabschnittes hinzuzufügen, wobei die Koppelleistung optimiert wird.

28. Verfahren nach Anspruch 26, weiter umfassend Bereitstellen eines zweiten Raman-unterstützten EDFA-Hybrid-Verstärkers mit einem variablen Raman-Verstärkungsabschnitt, einem EDFA-Verstärkungsabschnitt und einer optischen Dämpfungseinrichtung, die an den Ausgang des EDFA-Verstärkungabschnittes gekoppelt ist; und Justieren des Raman-Verstärkungs-Faktors des variablen Raman-Verstärkungsabschnittes, wobei die Eingangsleistung des zweiten EDFA-Verstärkungsabschnittes im wesentlichen der Eingangsleistung des ersten EDFA-Verstärkungsabschnittes entspricht.

29. Verfahren zur Verstärkung eines optischen Signals an einer Lichtwellenleiterkommunikationsverbindung, umfassend:
Bereitstellen einer Vielzahl von Raman-unterstützten EDFA-Hybrid-Verstärkern, wobei jeder einen variablen Raman-Verstärkungsabschnitt aufweist, einen EDFA-Verstärkungsabschnitt und eine optische Dämpfungseinrichtung, die mit einem Ausgang des EDFA-Verstärkerabschnittes gekoppelt ist;
Senden eines optischen Signals zu der Lichtwellenleiterkommunikationsverbindung durch den Raman-unterstützten EDFA-Hybrid-Verstärker;
Verstärken des optischen Signals durch die variablen Raman-Verstärkungsabschnitte;
Verstärken des optischen Signals durch die EDFA-Verstärkungsabschnitte; und
Dämpfen der Ausgangsleistung der EDFA-Verstärkungsabschnitte, um einen vorbestimmten Verlust an dem Ausgang der EDFA-Verstärkungsabschnitte hinzuzufügen, wobei die Koppelleistung in den nächsten Raman-unterstützten EDFA-Hybrid-Verstärker optimiert wird und die Eingangsleistung in den EDFA-Verstärkungsabschnitt im ganzen System gleich ist.

## Revendications

1. Système de communications optiques (10) comprenant :
un émetteur pour transmettre un signal optique ;
un récepteur pour détecter ledit signal optique ; et
une liaison de communication à fibre optique interposée entre ledit émetteur et ledit récepteur, ladite liaison de communication à fibre optique comprenant :
au moins un amplificateur hybride EDFA et à effet Raman (12) ayant une partie à gain variable d'amplification à effet Raman (14) et une partie à gain EDFA (18), et **caractérisé par** un atténuateur optique (20) couplé à la sortie de la dite sortie à gain EDFA.

2. Système selon la revendication 1, comprenant en outre au moins une fibre à dispersion-compensation (26) disposée entre ladite partie à gain variable d'amplification à effet Raman et ladite partie à gain EDFA.

3. Système selon la revendication 1, comprenant en outre au moins une fibre à dispersion-compensation disposée dans ladite partie à gain variable d'amplification à effet Raman.

4. Système selon la revendication 1, dans lequel ladite partie à gain EDFA comprend un amplificateur EDFA à plusieurs étages.

5. Système selon la revendication 4, comprenant en outre au moins une fibre à dispersion-compensation disposée entre les étages dudit amplificateur EDFA à plusieurs étages.

6. Système selon la revendication 1, dans lequel ladite liaison de communication à fibre optique comprend une pluralité de segments de fibre optique de longueurs variables connectés et arrangés entre ledit émetteur et ledit récepteur.

7. Système selon la revendication 1, comprenant en outre un second amplificateur hybride EDFA et à effet Raman, dans lequel ledit au moins un amplificateur hybride EDFA et à effet Raman est configuré pour délivrer une puissance de lancement optimale pour ledit second amplificateur hybride EDFA et à effet Raman.

8. Système selon la revendication 1, dans lequel ladite liaison de communication à fibre optique comprend une pluralité desdits amplificateurs hybrides EDFA et à effet Raman.

9. Système selon la revendication 8, dans lequel ledit atténuateur optique de chaque dite pluralité d'amplificateurs hybrides EDFA et à effet Raman est ajusté pour réduire la puissance de sortie de ladite partie à gain EDFA.

10. Système selon la revendication 9, dans lequel ladite puissance de sortie est ajustée par incréments de 1 dB jusqu'à ce qu'une puissance optimale soit atteinte pour être lancée dans l'amplificateur hybride EDFA et à effet Raman adjacent suivant.

11. Système selon la revendication 8, dans lequel lesdites parties à gain variable d'amplification à effet Raman sont manuellement ajustées jusqu'à ce que lesdites parties à gain EDFA aient sensiblement la même puissance d'entrée à travers ladite liaison de communication à fibre optique.

12. Système selon la revendication 8, dans lequel ledit atténuateur optique de chaque dite pluralité d'amplificateurs hybrides EDFA et à effet Raman est ajusté pour réduire la puissance de sortie de ladite partie à gain EDFA, et dans lequel lesdites parties à gain variable d'amplification à effet Raman sont ajustées manuellement jusqu'à ce que lesdites parties à gain EDFA aient sensiblement la même puissance d'entrée à travers ladite liaison de communication à fibre optique.

13. Système selon la revendication 8, dans lequel lesdites parties à gain variable d'amplification à effet Raman sont ajustées au moyen d'une boucle d'asservissement jusqu'à ce que lesdites parties à gain EDFA aient sensiblement la même puissance d'entrée à travers ladite liaison de communication à fibre optique.

14. Système selon la revendication 8, dans lequel ledit atténuateur optique de chaque dite pluralité d'amplificateurs hybrides EDFA et à effet Raman est ajusté pour réduire la puissance de sortie de ladite partie à gain EDFA, et dans lequel lesdites parties à gain variable d'amplification à effet Raman sont ajustées au moyen d'une boucle d'asservissement jusqu'à ce que lesdites parties à gain EDFA aient sensiblement la même puissance d'entrée à travers ladite liaison de communication à fibre optique.

15. Système selon la revendication 6, dans lequel lesdites longueurs des segments de fibre optique s'étendent d'environ 30 km à environ 110 km.

16. Amplificateur hybride EDFA et à effet Raman (12) comprenant :
une partie à gain variable d'amplification à effet Raman (14),
une partie à gain EDFA (18), et **caractérisé par** un atténuateur optique (20) couplé à la sortie de la dite sortie à gain EDFA.

17. Amplificateur selon la revendication 16, comprenant en outre au moins une fibre à dispersion-compensation (26) disposée entre ladite partie à gain variable d'amplification à effet Raman et ladite partie à gain EDFA.

18. Amplificateur selon la revendication 16, comprenant en outre au moins une fibre à dispersion-compensation disposée dans ladite partie à gain variable d'amplification à effet Raman.

19. Amplificateur selon la revendication 16, dans lequel ladite partie à gain EDFA comprend un amplificateur EDFA à plusieurs étages.

20. Amplificateur selon la revendication 19, comprenant en outre au moins une fibre à dispersion-compensation disposée entre les étages dudit amplificateur EDFA à plusieurs étages.

21. Amplificateur selon la revendication 16, dans lequel ladite partie à gain EDFA est un amplificateur EDFA à un seul étage.

22. Amplificateur selon la revendication 16, dans lequel ladite partie à effet Raman est configurée pour délivrer un gain variable, moyennant quoi ladite partie EDFA a une puissance d'entrée sensiblement constante.

23. Amplificateur selon la revendication 16, dans lequel ledit gain variable s'étend d'environ 1 dB à environ 16 dB.

24. Amplificateur selon la revendication 16, dans lequel ledit atténuateur optique réduit la puissance de sortie de la dite partie à gain EDFA.

25. Amplificateur selon la revendication 24, dans lequel ledit atténuateur réduit la puissance de sortie par incréments de 1 dB.

26. Procédé d'amplification d'un signal optique sur une liaison de communication à fibre optique, comprenant les étapes consistant à :
proposer un premier amplificateur hybride EDFA et à effet Raman ayant une partie à gain variable d'amplification à effet Raman, une partie à gain EDFA, et un atténuateur optique couplé à une sortie de ladite partie à gain EDFA ;
transmettre ledit signal optique sur ladite liaison de communication à fibre optique à travers ledit amplificateur hybride EDFA et à effet Raman ;
amplifier ledit signal optique à travers ladite partie à gain variable d'amplification à effet Raman ;
amplifier ledit signal optique à travers ladite partie à gain EDFA ; et
atténuer la puissance de sortie de ladite partie à gain EDFA.

27. Procédé selon la revendication 26, comprenant en outre l'étape consistant à ajuster ledit atténuateur optique pour ajouter une perte prédéterminée à la sortie de ladite partie à gain EDFA, moyennant quoi la puissance de lancement est optimisée.

28. Procédé selon la revendication 26, comprenant en outre les étapes consistant à :
proposer un second amplificateur hybride EDFA et à effet Raman ayant une partie à gain variable d'amplification à effet Raman, une partie à gain EDFA, et un atténuateur optique couplé à une sortie de ladite partie à gain EDFA ; et
ajuster le gain Raman de ladite première partie à gain variable d'amplification à effet Raman, moyennant quoi la puissance d'entrée de ladite seconde partie à gain EDFA est sensiblement la même que la puissance d'entrée de ladite première partie à gain EDFA.

29. Procédé d'amplification d'un signal optique sur une liaison de communication à fibre optique, comprenant les étapes consistant à :
proposer une pluralité d'amplificateurs hybrides EDFA et à effet Raman, ayant chacun une partie à gain variable d'amplification à effet Raman, une partie à gain EDFA, et un atténuateur optique couplé à une sortie de ladite partie à gain EDFA ;
transmettre ledit signal optique sur ladite liaison de communication à fibre optique à travers lesdits amplificateurs hybrides EDFA et à effet Raman ;
amplifier ledit signal optique à travers lesdites parties à gain variable d'amplification à effet Raman ;
amplifier ledit signal optique à travers lesdites parties à gain EDFA ; et
atténuer la puissance de sortie desdites parties à gain EDFA pour ajouter une perte prédéterminée à la sortie de chacune desdites parties à gain EDFA, moyennant quoi la puissance de lancement dans l'amplificateur hybride EDFA et à effet Raman suivant est optimisée et les puissances d'entrée dans lesdites parties à gain EDFA sont sensiblement les mêmes à travers tout le système.
